Europäisches Patentamt

European Patent Office

Office européen des brevets

(11) Publication number: **0 447 226 A2**

# EUROPEAN PATENT APPLICATION

(21) Application number: 91302153.1

(51) Int. Cl.⁵: **G06F 15/72**

(22) Date of filing: **14.03.91**

(30) Priority: **16.03.90 US 494712**

(43) Date of publication of application:
**18.09.91 Bulletin 91/38**

(84) Designated Contracting States:
**DE FR GB**

(71) Applicant: **Hewlett-Packard Company**
**Mail Stop 20 B-O, 3000 Hanover Street**
**Palo Alto, California 94304 (US)**

(72) Inventor: **Scott, Richard W.**
**1707 Barnwood Drive**
**Fort Collins, Colorado 80525 (US)**

(74) Representative: **Colgan, Stephen James et al**
**CARPMAELS & RANSFORD 43 Bloomsbury**
**Square**
**London WC1A 2RA (GB)**

(54) Computer graphics method for adding specular reflections to Images with shadow penumbrae.

(57)    A computer graphics method adds shadowed specular highlights to computer generated images by modifying the specular reflection value $(SR_i)$ for each vertex $(V)$ in the scene according to the value of a corresponding illumination coefficient $(Ib_i)$. The diffuse color value (RGB) for that vertex $(V)$ is then modified according to the value of the modified specular reflection value $(SR_i)$ for the corresponding vertex.

EP 0 447 226 A2

FIG.1

# COMPUTER GRAPHICS METHOD FOR ADDING SPECULAR REFLECTIONS TO IMAGES WITH SHADOW PENUMBRAE

## Field of the Invention

The present invention relates generally to the area of three dimensional computer graphics. More particularly, the present invention relates to a computer graphics method for realistically rendering shadowed specular highlights in a scene for which shadow penumbrae or regions of shadow penumbrae have been determined.

## Background of the Invention

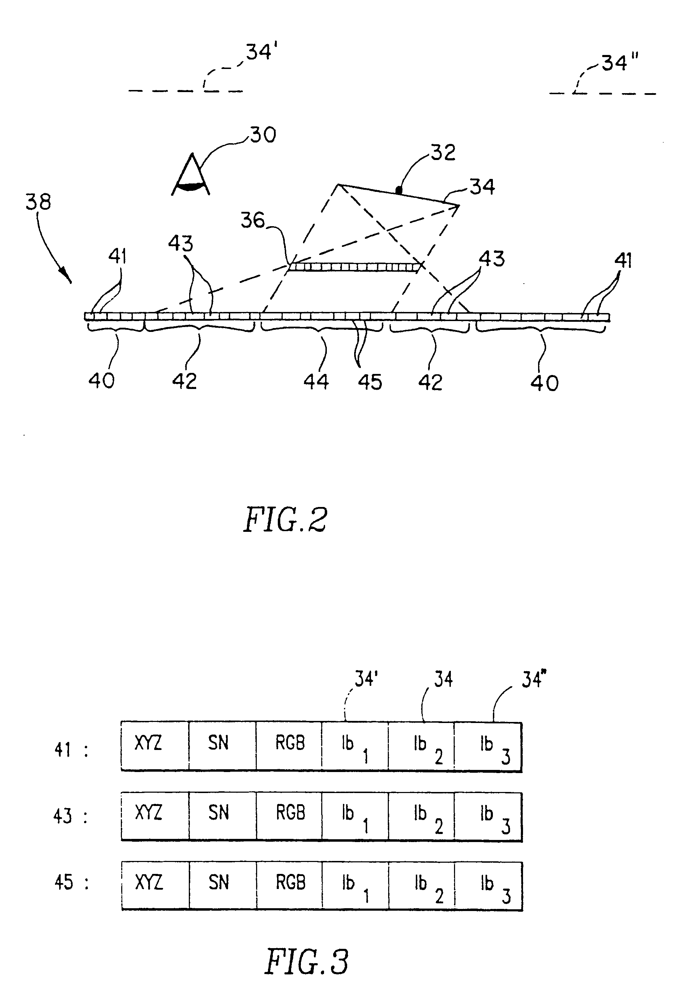

In traditional shadow rendering techniques, only the umbra of a shadow caused by the point lights is considered. This produces a sharp, and often incorrect, transition from areas of full illumination to areas of complete shadow since shadow penumbrae are not considered. (The meaning of the term "penumbra", as used in the computer graphics art, is well known. By way of example, and as described in more detail below, the regions 42 in Figure 2 that receive only partial illumination from an area light source 34 due to shadowing by object 36 are said to lie in the penumbra of shadows cast by object 36.) For example, ray tracing techniques which fall in this category are described in: Bouknight, J. and Kelley, K., "An Algorithm for Producing Half-Tone Computer Graphics Presentations with Shadows and Movable Light Sources", *Proc. AFIPS Spring Joint Computer Conf.,* Vol 36, pp. 1-10 (1970); Crow, F., "Shadow Algorithms for Computer Graphics", *Computer Graphics (SIGGRAPH Proc.),* vol. 11, no. 3, pp. 311-317 (1977); Williams, L., "Casting Curved Shadows on Curved Surfaces", *Computer Graphics (SIGGRAPH Proc.),* vol. 12, no. 3, pp. 270-274 (1978); Atherton, P., Weiler, K. and Greenberg, D., "Polygon Shadow Generation", *Computer Graphics (SIGGRAPH Proc.),* vol 12, no. 3, pp. 275-281 (1978); Whitted, T., "An Improved Illumination Model for Shaded Display", *Communications of the ACM,* vol. 23, no. 6, pp.343-349 (1980); and, Chin, N. and Feiner, S., "Near Real-Time Shadow Generation Using BSP Trees", *Computer Graphics (SIGGRAPH Proc.),* vol. 23, no. 3, pp. 99-106 (1989).

Some techniques, which include the basic radiosity method, render shadow penumbrae for diffuse reflections, but not for specular reflections. See, for example: Verbeck, Channing P. and Donald P. Greenberg, "A Comprehensive Light-Source Description for Computer Graphics," *IEEE CG&A,* Vol. 4, No. 7, pp. 66-75 (July, 1984); Goral, Cindy M., Kenneth E. Torrance, Donald P. Greenberg, and Bennet Battaile, "Modeling the Interaction of Light Between Diffuse Surfaces," *Computer Graphics (SIGGRAPH 1984 Proceedings)* Vol. 18, No. 3, pp. 213-222 (July, 1984); Nishita, Tomoyuki and Eihachiro Nakamac, "Continuous Tone Representation of Three-Dimensional Objects Taking Account of Shadows and Interreflection," *Computer Graphics (SIGGRAPH 1985 Proceedings)* Vol. 19, No. 3 pp. 23-30, (July, 1985); Cohen, Michael F. and Donald P. Greenberg, "The Hemi-Cube: A Radiosity Solution For Complex Environments," *Computer Graphics (SIGGRAPH 1985 Proceedings)* Vol. 19, No. 3, pp. 31-40 (July, 1985); Wallace, J.R., Elmquist, K.A., Haines, E.A. "A Ray Tracing Algorithm For Progressive Radiosity," *Computer Graphics (SIGGRAPH 1989 Proceedings)* Vol. 23, No. 3, pp. 315-324 (July, 1989); and, Baum, Daniel R., Holly E. Rushmeier and James W. Winget, "Improving Radiosity Solutions Through the Use of Analytically Determined Form-Factors," *Computer Graphics (SIGGRAPH 1989 Proceedings)* Vol. 23, No. 3, pp. 325-334 (July, 1989).

Recent shadow rendering algorithms, which include extensions to ray tracing and radiosity, calculate areas of penumbra as well as the specular reflections in the penumbra. See, for example: Heckbert, Paul and Pat Hanrahan, "Beam Tracing Polygonal Objects," *Computer Graphics (SIGGRAPH 1984 Proceedings)* Vol 18, No. 3, pp. 119-127 (July, 1984); Amanatides, John, "Ray Tracing With Cones," *Computer Graphics (SIGGRAPH 1984 Proceedings)* Vol. 18, No. 3, pp. 129-136 (July, 1984); Cook, Robert L., Thomas Porter, and Loren Carpenter, "Distributed Ray Tracing," *Computer Graphics (SIGGRAPH 1984 Proceedings)* Vol. 18, No. 3, pp. 137-145 (July, 1984); Brotman, Lynne S. and Norman I. Badler, "Generating Soft Shadows With a Depth Buffer Algorithm," *IEEE CG&A,* Vol. 4, No. 10, pp. 5-12 (October, 1984); Immel, David S., Michael F. Cohen and Donald P. Greenberg, "A Radiosity Method for Non Diffuse Environments," *Computer Graphics (SIGGRAPH 1986 Proceedings),* Vol. 20, No. 4, pp. 133-142 (August, 1986); Kajiya, James T., "The Rendering Equation," *Computer Graphics (SIGGRAPH 1986 Proceedings),* Vol. 20, No. 4, pp. 143-150 (August, 1986); Wallace, John R., Michael F. Cohen, and Donald P. Greenberg, "A Two-Pass Solution to the Rendering Equation: A Synthesis of Ray Tracing and Radiosity Methods," *Computer Graphics (SIGGRAPH 1987 Proceedings)* Vol. 21, No. 4, pp. 311-320 (July, 1987); Sillion, Francois and Calude Puech, "A General Two-Pass Method Integrating Specular and Diffuse Reflection," *Computer Graphics (SIGGRAPH 1989 Proceedings),* Vol. 23, No. 3, pp. 335-344 (July, 1989); Buckalew, Chris and Donald Fussell, "Illumination Networks: Fast Realistic Rendering With General Reflectance Functions," *Computer Graphics (SIGGRAPH 1989 Proceedings),* Vol. 23, No. 3, pp. 89-98 (July, 1989); Ward, Gregory J., Francis M. Rubinstein, and Robert D. Clear, "A Ray Tracing Solution for Diffuse Interreflection," *Computer Graphics (SIGGRAPH 1988 Proceedings)*, Vol. 22, No. 4, pp. 85-92 (August, 1988). Though many of these techniques render high quality images, none are suitable for interactive rendering. Moreover, each is expensive in terms of required computation time and are unable to achieve interactive rendering rates with currently available hardware technology.

All of the foregoing publications are incorporated herein by reference.

Many shadow rendering techniques, such as radiosity, consist of a series of independent steps. The geometry, surface color and surface reflectance properties of each object in the scene are specified and stored in a database. Light sources in the scene are also specified (e.g., definition, color, position, direction vector, spotlight information and attenuation characteristics) and stored in the database. Frequently, the light sources, e.g., area lights, can be modeled as one or more "point lights" to simplify the solution to the scene. The surface of each object in the scene is subdivided into a number of discrete surface patches, or polygons, each defined by a plurality of vertices (i.e., XYZ coordinates in three dimensional space). The geometric relationship between each vertex and the scene to every other vertex and the illumination for each vertex is determined. Illumination coefficients are also computed for each vertex, the function of which is described in detail below. In the case of radiosity, the illumination coefficients are obtained from calculations required to compute form factors, i.e., the illumination coefficients are derived from the computed form factors between light sources and vertices.

Determining the illumination of the scene also requires evaluating the specular highlight, or specular reflection, component for each light source/vertex combination in the scene. Evaluating the specular reflection component results in a specular reflection value that is indicative of an amount of reflection at the vertex resulting from light cast from each light source. For each light source/vertex combination in the scene, the database usually provides data comprising the XYZ coordinates of the vertex, a surface normal value for the vertex, and a diffuse color (RGB) value for the vertex, and, the technique may internally employ illumination coefficients for the vertex. The diffuse color value is an indication of a color to be assigned to the vertex, and, in the case of radiosity, accounts for the diffuse shading at the vertex, while the illumination coefficients are indicative of an amount of shadowing at the vertex resulting from light cast from area light sources.

An illumination coefficient is a fractional value that represents, for each vertex, the intensity of light at that vertex with respect to total intensity of light cast from an area light source. Each vertex has a unique illumination coefficient for each light source in the scene. Illumination coefficients can be derived according to a wide variety of techniques, and can be applied to the diffuse color value, and/or to the specular reflection value. Techniques for computing illumination coefficients in shadow penumbrae (such as the calculation of form factors) are described in the above-referenced Verbeck et al., Goral et al., Nishita et al., Cohen et al., Wallace et al., and Baum et al. articles. See also Brotman, Lynne S. and Norman J. Badler, "Generating Soft Shadows with a Depth Buffer Algorithm," *IEEE CG&A*, Vol. 4, No. 10, pp. 5-12 (October, 1984), also incorporated herein by reference..

In the prior art, the shadow rendering system may have information about the light sources, the viewer and the current polygon being rendered, but some prior art systems either do not have available, or do not employ, shadow informatirn about other polygons that may be occluding the current polygon from some or all of the light sources. Thus, for example, it is possible for the system to render a shiny or even a full intensity specular highlight for an object which is completely occluded from a light source; this would obviously be incorrect, and thus not realistic. Similarly, it is possible for the system to render a shiny or full intensity specular highlight for an object which lies in the penumbra of a shadow of an object, but for the same reason this would also be incorrect, and therefore not realistic.

Even though there are systems mentioned in the prior art which provide a more accurate solution for rendering specular reflections with shadow penumbra, they do not lend themselves to practical interactive use. With such systems, each time a scene is viewed from a different location (viewpoint), the propagation of light through the scene must be recomputed, a process which requires lengthy and complex calculations. The time required to display a reasonably complex scene each time the viewpoint is changed can be reduced from hours to seconds by this invention. In the computer graphics art, interactive rendering rates on the order of multiple frames per second for a reasonably complex scene (e.g., 10000 to 50,000 polygons) are desirable.

It is therefore desirable to provide a shadow rendering method that provides a reasonably good approximation of the correct specular highlights for objects in the scene that are in regions of shadow penumbrae at fast rendering rates so that the method may be employed with an interactive rendering system. The present invention achieves this goal.

## Summary of the Invention

The invention provides a means for computing diffuse and specular reflections for objects while taking into account regions of shadow penumbra for multiple area light sources. It provides a pragmatic approach to yield

EP 0 447 226 A2

a reasonable approximation of specular highlights in regions of shadow penumbrae at very fast rendering rates, i.e., seconds or minutes, as opposed to hours or days in the prior art.

According to the invention, an accurate approximation of view dependent specular reflections in the penumbra region of a shadow is rapidly computed on graphics rendering hardware by employing view independent shadow information which is precomputed by a global rendering algorithm such as radiosity. The view independent shadow information is expressed in terms of illumination coefficients that are precomputed and saved with each vertex of a polygon in the scene. The precomputed illumination coefficients are combined with diffuse reflection and specular highlight values for vertices in the scene.

A computer graphics method according to the invention comprises first providing a database defining a plurality of objects and light sources in a scene to be rendered by a computer graphics renderer. The scene is rendered by a shadow algorithm, such as radiosity, to provide at least illumination coefficients and diffuse color values (hereinafter "color values" or "vertex colors") for all of the vertices of surface elements (polygons) of each object in the scene. The specular reflection value for each vertex is determined, then the specular reflection value for each vertex is modified according to the value of the illumination coefficient for the corresponding vertex. The color value for each vertex is then modified according to the value of the modified specular reflection value for that vertex. The modified specular reflect'on value for the vertices are employed to display the scene on a display device associated with the computer graphics renderer. Since the effect of all light sources, as well as shadows provided by all intermediate (occluding) objects, is taken into account for each vertex, the result is a more realistic rendering of the specular highlights for the objects in the scene.

Further details of the invention will become evident from a reading of the following specification and claims.

## Brief Description of the Drawings

Figure 1 is a block diagram of a computer graphics renderer in which the method of the present invention may be employed.

Figure 2 illustrates the concept of illumination coefficients as used in connection with the practice of the present invention.

Figure 3 illustrates the concept of how data, including diffuse color (KGB) and illumination coefficients ($Ib_i$), are provided for each light source-vertex combination.

Figures 4A and 4B are a flow chart illustrating one preferred practice of the method of the present invention.

## Detailed Description of the Invention

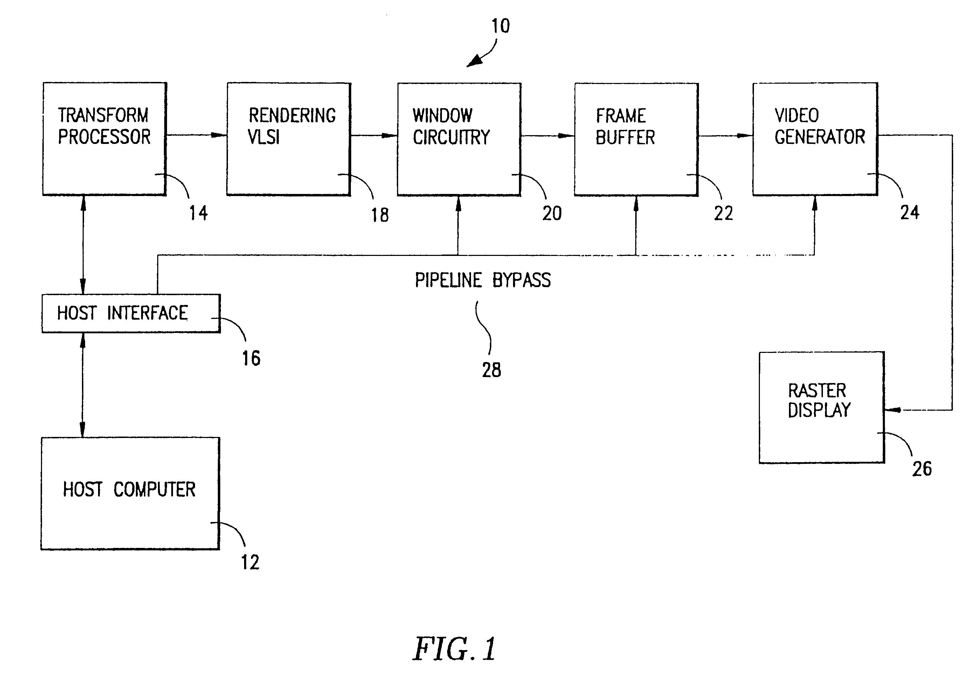

Referring to the drawings, wherein like numerals represent like elements, there is illustrated in Figure 1 a block diagram of a computer graphics renderer 10 in which the method of the present invention may be employed. It should be understood, however, that the present invention is not limited to graphics renderers of the type illustrated in Figure 1. Rather, the invention may be employed in connection with any graphics renderer employing a shadow rendering technique, such as radiosity. An example of another graphics renderer that may be employed in connection with the practice of the present invention is the HP Turbo SRX line of computer graphics stations available from Hewlett-Packard Company, Palo Alto, California.

The details of the graphics renderer 10 are more fully described in copending patent application serial number                    entitled "Methods And Apparatus For Accelerating Windows In Graphics Systems". See also, Rhoden, D. et al., "Hardware Acceleration For Window Systems," *SIGGRAPH Proceedings*, Computer Graphics, vol. 23, no. 3, pp. 61-67 (July 1989). The details of the graphics renderer 10 do not form a part of the present invention, and thus will not be discussed herein. Rather, reference should be made to the aforementioned documents. Suffice it to say that the graphics renderer 10 of Figure 1 comprises a host computer 12 communicating with a transform processor 14 via a host interface 16. The transform processor 14 communicates graphics data to a rendering VLSI (very large scale integrated circuit) 18, which in turn communicates data with window circuitry 20. Window circuitry 20 provides data to a frame buffer 22 which in turn communicates with a video generator 24. The video generator 24 controls the display of images on a raster display 26. Data is also communicated from the host computer 12 to window circuitry 20, frame buffer 22 and video generator 24 via interface 16 and a pipeline bypass 28.

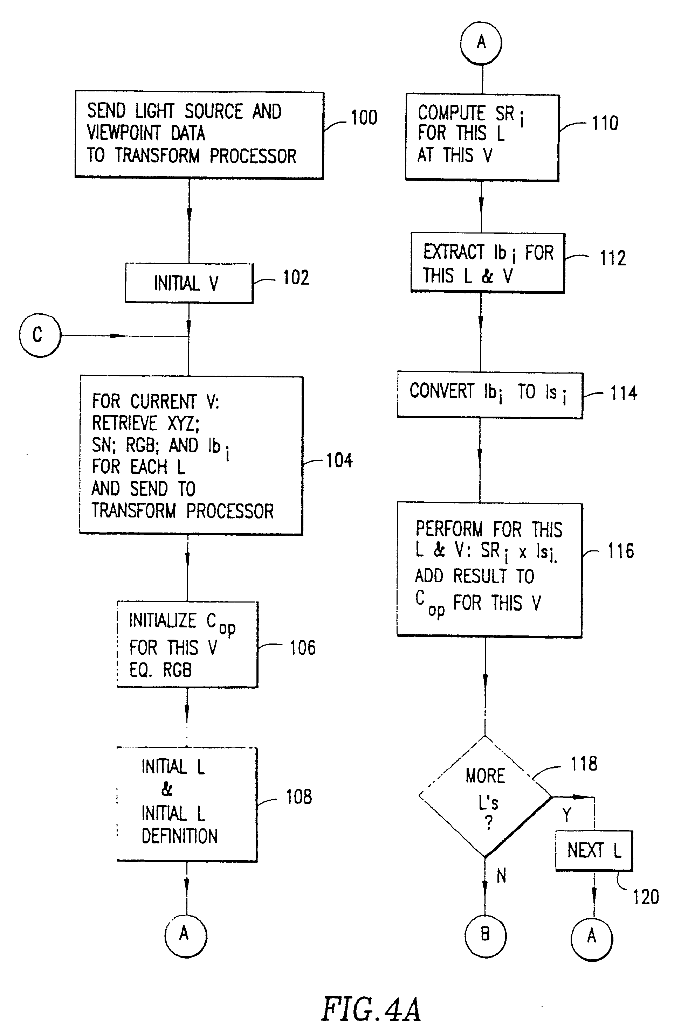

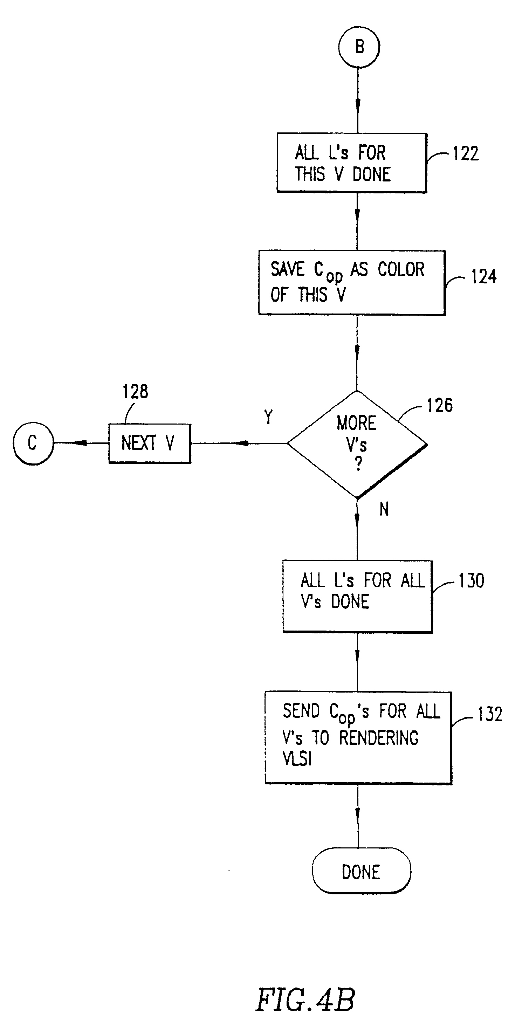

In one preferred embodiment, shadow rendering of the scene is rendered by a global technique such as radiosity in host computer 12 and the results, including XYZ coordinates, surface normal value (SN), diffuse color (RGB), and illumination coefficient ($Ib_i$) for each vertex are provided to the transform processor 14 as hereinbelow described. The transform processor 1 carries out the method illustrated by the flow charts of Figures 4A and 4B, and the results are communicated to the rendering VLSI 18.

Figure 2 is a two dimensional representation of a hypothetical three dimensional scene and illustrates the

5

concept of illumination coefficients. See the Background section hereof for a preliminary discussion of illumination coefficients. An area light source 34 is shown as being approximated by a point light source 32. In actual implementation, a plurality of point light sources 32 could be employed to approximate the area light source 34. As will be appreciated, vertices 41 of the object 38 that lie within the regions 40 will receive full illumination from the light source 34. In other words, the regions 40, and hence the vertices 41 thereof, are not occluded from light source 34, by the intermediate object 36, and further, the vertices 41 receive no shadowing due to light source 34 and object 36. On the other hand, vertices 45 in the region 44 are fully occluded from the light source 34 by the intervening object 36. Hence, they receive no illumination from the light source 34. Regions 42 lie in the penumbra of shadows cast by the intervening object 36 (from light originating from light source 34), and hence the vertices 43 will be shadowed by an amount that decreases as one moves from the region 44 to the regions 40. In other words, the amount of illumination received by each of the vertices 43 from the light source 34 will increase as one moves toward the region 40. The value assigned to the amount of illumination is the illumination coefficient for that light source-vertex combination.

It will be appreciated that if one or more additional light sources 34', 34" are in the scene, a separate set of illumination coefficients will be required to define the illumination level at each of the vertices 41, 43 and 45 as a result of light rays cast from the additional light sources 34', 34", and different shadows resulting from the intermediate object 36. For example, light cast from light sources 34' will result in shadows at some of the vertices 41, whereas light cast from light source 34 did not. Thus, as is known in the art, illumination coefficients must be provided for each light source-vertex combination to fully define illumination and shadow effects for the same.

It will also be appreciated from Figure 2 that the observed specular highlights of a scene will vary as the viewpoint 30 changes.

In the prior art, it is known to compute illumination coefficients by techniques such as form factors, stocastic sampling, or by an approximation of an area light source with multiple point light sources. Moreover, in the prior art, it is known to compute coefficients which are related to the amount of light from an area light source due to shadow penumbra effects. The value of these coefficients increases as the light intensity at the vertex increases. The illumination coefficient is typically a number in the range of zero to one which can be represented by an N bit digital word, such as a four bit word, representing the amount of illumination at the vertex. Thus, in the example of Figure 2, each of the vertices may be assigned a four bit value from binary 0000 (decimal zero) to binary 1111 (decimal fifteen). In this example, each of the vertices 41 in the region 40 would be assigned a value of 1111, each of the vertices 45 in the region 44 would be assigned a value of 0000, and each of the vertices 43 in the regions 42 would be assigned a value therebetween. In the present invention, the illumination coefficients are scaled to assume a value in the range of zero to one, inclusive, with zero representing no illumination, one representing maximum illumination, and values therebetween representing levels of shadow penumbra. Scaling of the illumination coefficients will be described below.

Turning now to Figure 3, further details of the invention will be explained. As mentioned, rendering the scene by, for example, radiosity, results in data for each light source-vertex combination. That data includes the XYZ coordinates of the vertex, a surface normal value for the light source/vertex combination, a diffuse color (RGB) value, and a unique illumination coefficient ($Ib_i$) for each light source-vertex combination. In Figure 3, these data are illustrated as XYZ, SN, RGB and $Ib_i$ respectively. Figure 3 illustrates how this data is associated with each vertex in the scene. For example, for each vertex 41 of object 38, a data word is provided for each light source 34, 34', 34" in the scene. Similarly, for each vertex 43, 45, data words are provided for each light source 34, 34', 34". As will be appreciated hereinafter, these data words are employed to compute an approximation of the true specular highlights for each and every vertex in the scene.

Turning now to Figures 4A and 4B, the method of the present invention will be described in detail.

Not illustrated in the flowchart of Figures 4A and 4B is the well known step of providing a database defining a plurality of objects and light sources in the scene to be rendered and obtaining illumination coefficients by a shadow rendering technique such as radiosity. After the database is provided and the scene's illumination coefficients have been obtained, the steps illustrated in Figures 4A and 4B may be executed.

The following symbols are utilized in connection with the flowchart of Figures 4A and 4B:

V = vertex
L = light source
XYZ = XYZ coordinates of vertex (V)
SN = Surface normal value for the vertex (V)
RGB = Diffuse color at vertex(V) ("vertex color")
$Ib_i$ = Illumination coefficients for vertex (V)
$C_{op}$ = Output color for vertex (V)
$SR_i$ = Specular reflection values for vertex (V)

Is$_i$ = Scaled illumination coefficients for vertex (V)

Block 100 illustrates the well known step of supplying light source definiton and viewpoint data to the graphics renderer, or in this case to the transform processor 14.

As indicated at step 102, an initial one of the vertices V in the scene is next selected.

As mentioned, the shadow rendering algorithm solves the illumination for each light source-vertex (L/V) combination in the scene, e.g., by radiosity, so as to yield the corresponding diffuse color value (RGB) and illumination coefficients (Ib$_i$) along with the XYZ coordinate data and surface normal value (SN) for each vertex in the database. If the graphics renderer of Figure 1 is employed, then the solution may be carried out by the host computer 12 and the results (XYZ, SN, RGB, Ib$_i$) may be stored therein. As illustrated at step 104, the XYZ, SN, RGB, and Ib$_i$ data for this vertex V (i.e., the initial vertex selected at 102) are retrieved by the transform processor 14 for further processing as described herein.

At step 106, an output color C$_{op}$ is provided for this vertex. As indicated, the output color C$_{op}$ is initially defined as the diffuse color (RGB) for this vertex that was retrieved in step 104.

As illustrated in step 108, an initial one of the light sources in the scene is selected, and the definition for the selected light source is supplied to approximate the light source under consideration. As is known in the art, light source definitions generally include information relating to color, position, direction and attenuation characteristics. At step 110, the specular reflection value (SR$_i$) for the selected light source-vertex (L/V) combination is computed. In a preferred embodiment, specular reflection (SR$_i$) is computed in accordance with the technique described in Phong, Bui-Tuong, "Illumination For Computer Generated Images," *Communications of the ACM*, Vol. 18, No. 6, pp. 322-317 (June, 1975) ("the Phong technique"), but the invention may be employed with any lighting model that computes diffuse and specular reflections, such as described in Cook, Robert L. and Kenneth E. Torrance, "A Reflectance Model For Computer Graphics" *ACM transactions on Graphics,* Vol. 1, No. 1, pp. 7-24 (January, 1982); or any bidirectional reflectance equation as noted in Wallace, John R., Michael F. Cohen, and Donald P. Greenberg, "A Two-Pass Solution to the Rendering Equation: A Synthesis of Ray Tracing and Radiosity Methods," *Computer Graphics (SIGGRAPH 1989 Proceedings)*, Vol. 21, No. 4, pp. 311-320 (July, 1987), all of which are incorporated herein by reference. Thereafter, at step 112, the N bit illumination coefficient for the selected light source-vertex (L/V) is retrieved, (see Figure 3), and as illustrated at step 114, is scaled to a value Is$_i$ between zero and one inclusive, as hereinbefore described. Scaling is performed by dividing the illumination coefficient (Ib$_i$) by $2^N - 1$.

As illustrated at step 116, the specular reflection value for the selected light source-vertex (L/V) combination is multiplied by the scaled illumination coefficient (Is$_i$) for the selected light source/vertex combination. The output color C$_{op}$ for this vertex (V) is then updated by adding the result of this multiplication to the most previous output color value C$_{op}$ for the selected vertex, as also illustrated at step 116. At steps 118, 120, the next light source for this vertex is selected and steps 110-116 are repeated. This process continues until the data for all light sources associated with the selected vertex has been processed as described above.

As illustrated at 122, after the data associated with the last light source for the selected vertex has been processed, the resulting output color C$_{op}$ is saved as the final vertex color for this vertex. It should be appreciated that this final vertex color takes into account all shading and shadowing, and hence adjustments to the specular highlight, occurring as the result of shadow effects from the plural light sources. It will be also appreciated that the process of updating and rendering the final output C$_{op}$ for each vertex (V) may be mathematically expressed as follows:

$$C_{op} \text{ (final)} = C_{op} \text{ (initial)} + \sum_{i=o}^{n} (SR_i \times Is_i)$$

where i represents the number of light sources under consideration for each vertex (V).

Steps 126 and 128 illustrate repetition of steps 104-124 for and each and every vertex in the scene until all vertices have been processed in the manner described above. It will be appreciated that as a result of this method, a final output color C$_{op}$ will be provided for each vertex and that this output color will be adjusted to reflect an approximation of the true specular highlights at the vertex. As illustrated at steps 130, 132, when all light source-vertex combinations have been processed, the final vertex colors for all vertices may be saved for rendering the final image. If a graphics renderer of the type of Figure 1 is employed, then the final vertex colors may be provided to the rendering VLSI 18.

The invention may be employed with diffuse and/or specular values which can be either computed in the renderer (e.g., transform processor) or supplied in the database, and thus is not limited to the preferred embodiment disclosed herein.

It will be appreciated that, broadly speaking, in accordance with the above described invention, a computer graphics renderer employing a database defining a plurality of objects and light sources in a scene to be rendered by the renderer and employing at least illumination coefficients and diffuse color values for rendering vertices of surface elements of each object, employs the following method:

a) determining specular reflection values for each vertex;

b) modifying the specular reflection value for each vertex according to an illumination coefficient corresponding to the vertex;

c) initially defining a vertex color value for each vertex as the diffuse color value for the vertex and modifying the vertex color value for each vertex according to the modified specular reflection value corresponding to the vertex; and,

d) employing the modified vertex color values for the vertices to display the scene on a display device associated with the renderer.

It is known in some illumination models to provide a coefficient of ambient reflection and color values for an ambient light source. If the method of the present invention is employed with such a model, then it is preferred that these values be set to 1.0 so that the diffuse color (RGB) values will actually be treated as ambient values and will remain unchanged by the renderer. If the illumination model also employs a coefficient of diffuse reflection, it is preferred that this value be set to 0.0 so that the renderer will not compute a second diffuse component. Finally, if the illumination model employs a coefficient of specular reflection, it is preferred that this be set to 1.0 so that the specular values computed by the renderer will be added to the radiosity values employed by the renderer.

In the case of radiosity, an illumination coefficient at a sample point on a surface is determined by the form factors between an area light source and the point itself. Form factors are described in the aforementioned Wallace et al. article entitled "A Ray Tracing Algorithm for Progressive Radiosity" and also in copending application serial no. 332,777 filed April 3, 1989 and entitled "Three Dimensional Computer Graphics Method Employing Ray Tracing to Compute Form Factors in Radiosity". The light sources used during the calculation of the specular reflections are point light sources that approximate the area light sources used in the radiosity computation. More point light sources can be used to approximate a large area light source by subdividing the area light source before form factors are computed. This will decrease discrepancies caused by approximating an area light source with a point light source. Illumination coefficients which result from the form factors of an area light source are correlated with the point light source which is chosen to approximate the area light source.

The present invention may be embodied in other specific forms with departing from the spirit or essential attributes thereof and, accordingly, reference should be made to the appended claims rather than to the foregoing specification, as indicating the scope of the invention.

## Claims

1. In a computer graphics renderer (10) employing a database defining a plurality of objects (38) and light sources (34) in a scene to be rendered by the renderer and employing at least illumination coefficients (Ib) and diffuse color values (RGB) for rendering vertices (V) of surface elements of each object, a method comprising the steps of:

a) determining specular reflection values $(SR_i)$ for each vertex (V);

b) modifying the specular reflection value $(SR_i)$ for each vertex (V) according to an illumination coefficient $(Ib_i)$ corresponding to the vertex (V);

c) initially defining a vertex color value $(C_{op})$ for each vertex as the diffuse color value (RGB) for the vertex (V) and modifying the vertex color value $(C_{op})$ for each vertex (V) according to the modified specular reflection value $(SR_i)$ corresponding to the vertex (V); and,

d) employing the modified vertex color values $(SR_i)$ for the vertices (V) to display the scene on a display device (26) associated with the renderer.

2. Method according to claim 1 wherein specular reflection values are determined according to a Phong technique.

3. Method according to claim 1 or 2 wherein rendering is performed by a radiosity technique.

4. Method according to claim 1, 2 or 3 wherein each illumination coefficient provided by the global illumination rendering is an N bit digital word, further comprising the step of dividing each illumination coefficient $(Ib_i)$ by $2^N-1$ to provide scaled illumination coefficients $(Is_i)$, and step (d) comprises multiplying the specular ref-

lection value (SR$_i$) for each vertex (V) by the scaled illumination coefficient (Is$_i$) for the corresponding vertex (V).

5. Method according to claim 4 wherein, (i) for a vertex (45) that is fully occluded from a selected light source by an intermediate object (36), the corresponding scaled illumination coefficient (Is$_i$) has a value of zero, (ii) for a vertex (41) that is fully visible to the selected light source, the corresponding scaled illumination coefficient (Is$_i$) has a value of one, and, (iii) for a vertex (43) that lies in a penumbra of a shadow cast by the intermediate object (36), the corresponding scaled illumination coefficient (Is$_i$) has a value therebetween.

6. Method according to claim 1 or 4 wherein there are plural modified specular reflection values (SR$_i$) for each vertex (V) and wherein, for each vertex (V), the modified specular reflection values (SR$_i$) are combined to provide an overall modified specular reflection value for the vertex (V), and the vertex color value (C$_{op}$) for each vertex is modified according to the overall modified specular reflection value corresponding to that vertex (V).

7. Method according to claim 4 or 6 wherein step (b) comprises summing together vertex color values (C$_{op}$) with modified specular reflection values (SR$_i$) for corresponding vertices (V).

8. Method according to claim 1 wherein the computer graphics renderer comprises a host CPU (12) for storing the database and performing step (b), a transform processor (14) for receiving the results of step (b) and performing steps (c), (d) and (e), and a rendering VLSI (18) for receiving the results of step (e).

9. Method according to claim 1 wherein there are plural light source (34) - vertex (V) combinations and step (d) comprises determining XYZ coordinates (XYZ) and a surface normal value (SN) for each vertex (V), there being a data word associated with each light source (34) - vertex (V) combination comprising the XYZ coordinates (XYZ), the surface normal value (SN), the diffuse color value (RGB), and the illumination coefficient (Ib$_i$) and wherein there are L light sources (34), further comprising the step of, for each vertex, forming a secondary data word the containing only the illumination coefficients (Ib$_i$) corresponding to the L light sources (34) prior to performing step (b).

10. In a graphics rendering system (10) for rendering a three dimensional scene, a method comprising the steps of:
    a) providing a database defining a plurality of objects (38) in the scene and light sources (34) illuminating the scene;
    b) approximating surfaces of each object (38) in the scene as polygons in three dimensional space, each polygon being defined by a plurality of vertices (V), there being a plurality of light source (34) - vertex (V) combinations (L, V);
    c) rendering global illumination of the scene by radiosity to provide XYZ coordinates (XYZ), a surface normal value (SN), a diffuse color value (RGB) and an illumination coefficient (Ib) for each light source (34) - vertex (V) combination, the illumination coefficient (Ib) being indicative of an amount of shadowing at the vertex (V) resulting from light cast from the light source (34), the diffuse color value (RGB) being an indication of a color to be assigned to the vertex (V);
    d) selecting an initial one of the vertices (V);
    e) providing a vertex color value (C$_{op}$) for the selected vertex (V), the vertex color being (C$_{op}$) initially defined as the diffuse color value (RGB) for the vertex provided in step (c);
    f) selecting an initial one of the light sources (34);
    g) computing a specular reflection value (SR$_i$) for the selected light source (34) - vertex (V) combination, the specular reflection value (SR$_i$) being indicative of an amount of reflection at the selected vertex (V) resulting from light cast from the selected light source (34);
    h) scaling the illumination coefficient (Ib) for the selected light source (34) - vertex (V) combination to a value between zero and one;
    i) multiplying the specular reflection value (SR$_i$) for the selected light source (34) - vertex (V) combination by the scaled illumination coefficient (Is$_i$) for the selected light source (34) - vertex (V) combination and updating the vertex color value (C$_{op}$) by adding the result of the multiplication to the most previous vertex color value (C$_{op}$) for the selected vertex (V);
    j) selecting another light source (34);
    k) repeating steps (g) - (j) for each light source (34) until all light sources have been selected;

l) selecting another vertex (V):

m) repeating steps (e) - (l) until all vertices have been selected; and,

n) rendering the scene on a display device (26) associated with the graphics system in accordance with the updated vertex color value for each vertex.

*FIG. 1*

HOST COMPUTER — 12

HOST INTERFACE — 16

TRANSFORM PROCESSOR — 14

RENDERING VLSI — 18

WINDOW CIRCUITRY — 20

FRAME BUFFER — 22

VIDEO GENERATOR — 24

RASTER DISPLAY — 26

PIPELINE BYPASS — 28

10

FIG.2

FIG.3

A

| SEND LIGHT SOURCE AND VIEWPOINT DATA TO TRANSFORM PROCESSOR | 100 |

| COMPUTE $SR_i$ FOR THIS L AT THIS V | 110 |

| INITIAL V | 102 |

| EXTRACT $Ib_i$ FOR THIS L & V | 112 |

C

| FOR CURRENT V: RETRIEVE XYZ; SN; RGB; AND $Ib_i$ FOR EACH L AND SEND TO TRANSFORM PROCESSOR | 104 |

| CONVERT $Ib_i$ TO $Is_i$ | 114 |

| INITIALIZE $C_{op}$ FOR THIS V EQ. RGB | 106 |

| PERFORM FOR THIS L & V: $SR_i \times Is_i$. ADD RESULT TO $C_{op}$ FOR THIS V | 116 |

| INITIAL L & INITIAL L DEFINITION | 108 |

MORE L's ? — 118

Y

| NEXT L | 120 |

N

A

B

A

*FIG.4A*

B

ALL L's FOR
THIS V DONE — 122

SAVE $C_{op}$ AS COLOR
OF THIS V — 124

128

C ← NEXT V ← Y ← MORE
V's
? — 126

N

ALL L's FOR ALL
V's DONE — 130

SEND $C_{op}$'s FOR ALL
V's TO RENDERING
VLSI — 132

DONE

*FIG.4B*

14